# EUROPEAN PATENT SPECIFICATION

(11) **EP 0 291 342 B1**
(45) Date of publication and mention of the grant of the patent: **03.11.1993**
(21) Application number: 88304376.2
(22) Date of filing: 13.05.1988
(51) Int. Cl.: G06K 7/08

(54) **Card or the like reader**
Leser für Karten oder ähnliche Datenträger
Lecteur de cartes ou de supports de données semblables

(30) Priority: 15.05.1987 JP 119839/87
(43) Date of publication of application: 17.11.1988
(73) Proprietor: SHARP KABUSHIKI KAISHA, Osaka 545 (JP)
(72) Inventor: Mizote, Hiroshi, Yamatokoriyama-shi Nara-ken (JP)
(74) Representative: Brown, Kenneth Richard

(56) References cited:
- EP-A- 0 177 900
- US-A- 4 276 469
- PATENT ABSTRACTS OF JAPAN, vol. 9, no. 232 (P-389)(1955) 18 September 1985; & JP-A-6087467
- PATENT ABSTRACTS OF JAPAN, vol. 9, no. 129 (P-361)(1852) 5 June 1985; & JP-A-6011972
- PATENT ABSTRACTS OF JAPAN, vol. 9, no. 127 (P-360)(1850) 31 May 1985; & JP-A-6010479

## Description

The present invention relates to a card or the like reader, and more specifically to a magnetic data reader which reads magnetically recorded content of a magnetic card such as a cash card or credit card.

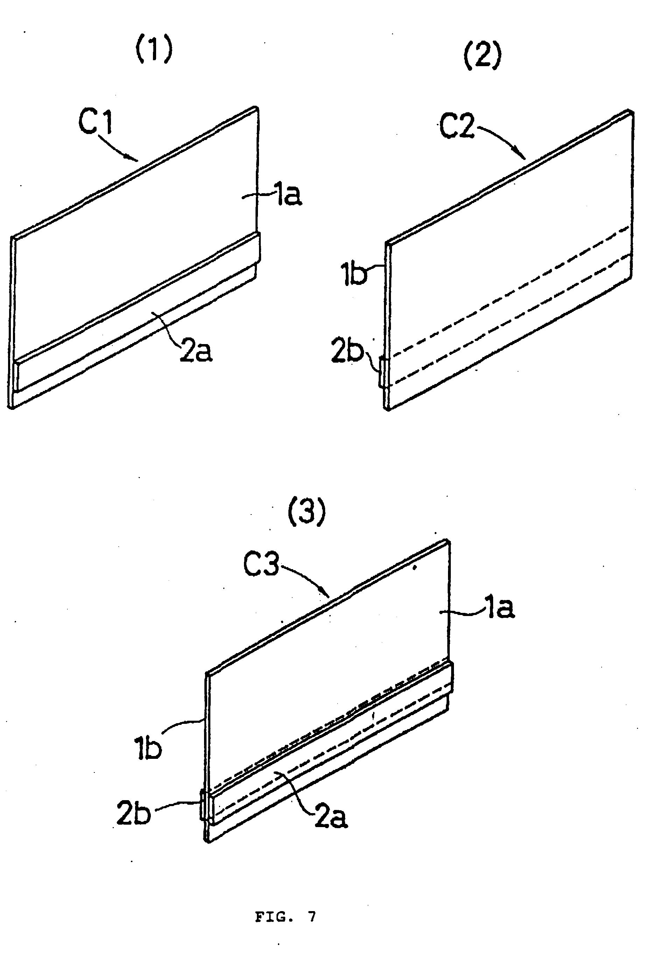

The magnetic recording region of a magnetic card such as a cash card or credit card is specified in the three kinds of types as indicated in Fig. 7. Namely, in the case of a magnetic card C1 indicated in Fig. 7(1), a magnetic recording region 2a in the form of a stripe is provided to the surface 1a of the card. This magnetic card C1 is called a JBA type and is often used in the banking or credit systems in Japan. Meanwhile, in the case of a magnetic card C2 indicated in Fig. 7(2), a stripe magnetic recording region 2b is provided to the rear surface 1b of the card. This magnetic card C2 is called a ABA type and is used in the foreign countries, particularly in the USA. A magnetic card C3 indicated in Fig. 7(3) is called an international card. In the case of this card, the magnetic recording regions 2a, 2b in which the same contents of data are recorded are provided to the front surface 1a and the rear surface 1b of the card.

For the readout operation of magnetic cards C1, C2, an exclusive magnetic card reader having only one readout head is used. Such an exclusive magnetic card reader cannot read data of the magnetic card C3.

Therefore, a so-called double-head type magnetic card reader having a pair of readout heads is used in order to read the data recorded on the magnetic card C3. In the case of this double-head type magnetic card reader, any one of the ABA mode and JBA mode is preset from the keyboard and the recorded data of any one of the magnetic recording regions 2a, 2b of the card C3 inserted are read in accordance with such preset mode. Accordingly, this double-head type magnetic card reader is capable of reading the data of magnetic card C1 or C2 by setting the mode, in addition to the magnetic card C3.

In such prior art if an operator sets errorneously the mode other than the read operation mode on the occasion of reading the magnetic card C1 or C2, the wanted data cannot be read. Moreover, in such prior arts, the initial setting has been required for any type of the decode softwares of controller for the reader (JBA and ABA type) by the mode setting operations.

The Japanese Patent Abstracts for JP-A-60-87467 and JP-A-60-10479 show arrangements for simultaneously reading magnetic data from the two faces of a card. However, JP-A-60-87467 concerns the problem of correct insertion of the card, by discriminating the type of magnetic recording. The result of the discrimination apparently decides the data of which face to process. JP-A-60-10479 does not disclose a solution to the problem of reading a card with data on both faces. EP-A-0 177 900 discloses priority selection, but it applies to sequential reading of the two media and involves a validation step with user input in between.

It is therefore an object of the present invention to provide a card or the like reader which has solved the technical problems of the prior arts explained previously and is capable of reading data recorded on a card or the like providing a variety of recording regions and also preferentially outputting the signal read out in any one of the one mode or the other mode.

This object is achieved by the provision of a card reading system as defined in claim 1.

The present invention will become more fully understood from the detailed descrption given hereinbelow and the accompanying drawings which are given by way of illustration only, and thus are not limitative of the present invention and wherein:
Fig. 1 is a block diagram indicating an electrical structure of a magnetic card reader 10 as an embodiment of the present invention;
Fig. 2(1) is another embodiment of a switch circuit 10;
Fig. 2(2) is another embodiment of a switch circuit 22;
Fig. 3 is a format of data recorded on the magnetic card C1 for JBA recording;
Fig. 4 is a format of data recorded on the magnetic card C3 for ABA specification;
Fig. 5 indicates the store region of a start mark detection register A provided on a processing circuit 13;
Fig. 6 is a flowchart indicating discrimination process for ABA/JBA; and
Fig. 7 are perspective views of the magnetic cards C1, C2, C3.

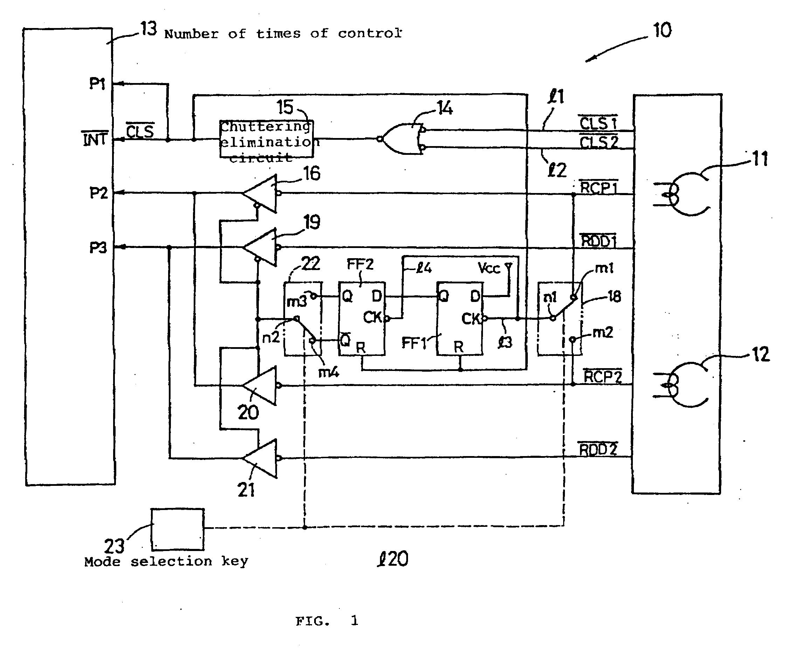

Fig. 1 is a block diagram indicating an electrical structure of a magnetic card reader 10 as an embodiment of the present invention. This magnetic card reader 10 is used for reading any type of the card C1 for JBA having the magnetic recording region 2a at the front surface 1a, the card C2 for ABA having the magnetic recording region 2b at the rear surface 1b and the card C3 for international card (ABA/JBA) having the magnetic recording regions 2a, 2b in which the same content of data are recorded to both front and rear surfaces 1a and 1b. The magnetic cards C1, C2, C3 are indicated by the card C when these are generally called.

This magnetic card reader 10 comprises a first readout head 11 for reading the magnetic recording region 2a and a second readout head 12 for reading the magnetic recording region 2b. When a magnetic card C is inserted into the magnetic card reader, card insertion signals C̅L̅S̅1̅, C̅L̅S̅2̅ sent from the first and second readout heads 11, 12 are applied to the input terminal of an AND gate 14 after these are inverted through the lines ℓ1 and ℓ2. An output from the AND gate 14 is inverted and applied to a chuttering elimination circuit 15 in order to eliminate chuttering. An output from the chuttering elimination circuit 15 is applied to an interrupt port I̅N̅T̅ of a control circuit 13 and is also applied to the port P1. In the control circuit 13, the interrupt port I̅N̅T̅ is activated when it is in the low level. After it is checked that a port P1 is in the low level after the constant period, it is also checked that an interrupt signal is applied.

A data sampling pulse signal R̅C̅P̅1̅ sent from the first readout head 11 is applied to a port P2 of the control circuit 13 through a tristate buffer 16. Moreover, the deta sampling pulse signal R̅C̅P̅1̅ sent from the first readout head 11 is applied to an individual contract ml of a switch circuit 18. In addition, a readout data signal R̅D̅D̅1̅ sent from the first readout head 11 is applied to a port P3 of the control circuit 13 through a tristate buffer 19. The tristate buffers 16, 19 form a first switch means.

A data sampling pulse signal R̅C̅P̅2̅ sent from the second readout head 12 is applied to the port P2 of control circuit 13 through a tristate buffer 20. This data sampling pulse signal R̅C̅P̅2̅ is applied to an individual contact 2 of the switch circuit 18. A readout data signal R̅D̅D̅2̅ sent from the second readout head 12 is applied to the port P3 of control circuit 13 through a tristate buffer 21. These tristate buffers 20, 21 form a second switch means. A common contact n1 of the switch circuit 18 is connected to clock terminal CK of flip-flop FF1 through the line ℓ3. This common contact n1 is also connected to a clock terminal CK of flip-flop FF2 through the line ℓ4. The power supply voltage V_{cc} is applied to an input terminal D of the flip-flop FF1. An output of an output terminal Q of flip-flop FF1 is then applied to the input terminal D of flip-flop FF2. The output terminal Q of flip-flop FF2 is connected to the individual contact m3 of switch circuit 22 through the line ℓ10. In addition, an output from an output terminal Q̅ of the flip-flop 2 is connected to the individual contact m4 of the switch circuit 22 through the line ℓ11. An output of the chuttering elimination circuit 15 is applied to each reset terminal R of the flip-flops FF1, FF2. The common contact n2 of the switch circuit 22 is connected to the control terminal of tristate buffers 16, 19 through the line ℓ12 and is also connected to the control terminal of tristate buffers 20, 21. When the control terminal is low level, the tristate buffers 16, 19 become conductive, but when it is high level, the tristate buffers become nonconductive. When the control terminal is low level, the tristate buffers 20, 21 become nonconductive but when it is high level, these buffers become conductive.

The switch circuits 18, 22 are caused to change the switching mode thereof with the switching operation signal sent from a mode selection key 23.

Operations of the magnetic card reader 10 having such a structure are explained hereinafter. First, when the JBA mode is selected by the selectin input key 23, a line ℓ20 becomes high level and thereby the common contact n1 of the switch circuit 18 and the individual contact m1 become conductive and the common contact n2 of the switch circuit 22 of the individual contact m4 become conductive. Under this condition, when a JBA card C1 is inserted, for example, the card insertion signal C̅L̅S̅1̅ becomes low level and thereby an output of the AND gate 14 becomes low level, followed by the reset of the flip-flops FF1, FF2. Moreover, the data sampling pulse signal R̅C̅P̅1̅ is applied to each input terminal CK of the flip-flop FF1 and flip-flop FF2. The output terminal Q of flip-flop FF1 latches the condition of the data input terminal D, namely the high level, at the first falling edge of the data sampling pulse signal R̅C̅P̅1̅. Accordingly, a high level signal is thereafter guided from the output terminal Q of the flip-flop FF1. Meanwhile, in the flip-flop FF2, since the input terminal D is high level at the second falling edge of the data sampling pulse signal R̅C̅P̅1̅, the output terminal Q becomes high level and the output terminal Q̅ becomes low level. Thereafter, a low level signal is output from the output termnal Q̅. Thereby, the tristate buffers 16, 19 become conductive and the tristate buffers 20, 21 become nonconductive. As a result, the signals R̅C̅P̅1̅ and R̅D̅D̅1̅ are respectively applied to the ports P2, P3 of the control circuit 13 to read the readout data with the specified sampling pulse.

Next, when the ABA card C2 is inserted to a magnetic card reader 10, the card insertion signal C̅L̅S̅2̅ becomes low level and thereby the interrupt terminal I̅N̅T̅ of the control circuit 13 is activated. Simultaneously, the flip-flops FF1, FF2 are reset. In this timing, the data sampling pulse signal R̅C̅P̅1̅ remains in the high level since the ABA card C2 is inserted and the flip-flop FF1 remains under the reset condition. Namely, the output terminal Q of the flip-flop FF1 is low level and therefore the output terminal Q̅ of the flip-flop FF2 becomes high level. Accordingly, the tristate buffers 17, 19 are nonconductive, while the tristate buffers 20, 21 are conductive. Therefore, the data sampling pulse signal R̅C̅P̅2̅ and the readout data signal R̅D̅D̅2̅ sent from the second readout head 12 are guided to the port P3 of the control circuit 13 and thereby the sampling pulse signal R̅D̅D̅2̅ of signal R̅C̅P̅2̅ is read. Namely, when setting is made so that the JBA side has priority, the readout signal sent from the second readout head 12 is sent to the control circuit 13 in case the first signal is not read out.

Next, when the international card C3 is inserted to the magnetic card reader 10, the first readout signal is read out by the first readout head 11 and the second readout signal is read by the second readout head 12. The card insertion signal C̅L̅S̅1̅ is guided from the first readout head 11 through the line ℓ1 and the card insertion signal C̅L̅S̅2̅ is guided from the second readout head 12 through the line ℓ2. Thereby, an output of the AND gate 14 is inverted and a low level output can be obtained. Accordingly, the interrupt port I̅N̅T̅ of the control circuit 13 is activated. Meanwhile, the low level signal resets the flip-flops FF1, FF2. Simultaneously, the sampling pulse signal R̅C̅P̅1̅ sent from the first readout head 11 is input to the input terminal CK of the flip-flops FF1, FF2. The output terminal Q of the flip-flop FF1 is latched to the high level at the first falling edge of this signal R̅C̅P̅1̅. Therefore, the output terminal Q̅ becomes low level at the first falling edge of the signal R̅C̅P̅1̅ in the flip-flop FF2. Thereby, the tristate buffers 16, 19 become conductive and the tristate buffers 20, 21 become nonconductive. Accordingly, the sampling pulse signal R̅C̅P̅1̅ and the readout data signal R̅D̅D̅1̅ sent from the first readout head 11 are respectively applied to the ports P2, P3 of the control circuit 13 through the tristate buffers 16, 19. Therefore, the read data R̅D̅D̅1̅ is read depending on the sampling pulse of the sampling pulse signal R̅C̅P̅1̅.

Thereby, when the international card C3 is inserted as explained above, the first readout signal sent from the first readout head 11 is preferentially read by the processing circuit 13.

When the first readout signal sent from the first readout head 11 is read out while it is set preferentially as explained above, the first readout signal is directly applied to the processing circuit 13. When the first and second readout signals are read, the first readout signal is applied to the processing circuit 13 preferentially. Accordingly, even when an operator sets the ABA mode by operation mistake with the intension to select and designate the JBA mode in order to read the JBA magnetic card C1 and the JBA magnetic card C1 is inserted, the signal read by any of the first readout head 11 and the second headout head 12 is applied to the control circuit 13 and therefore the magnetically recorded content can be read even if such operation mistake by an operator occurs.

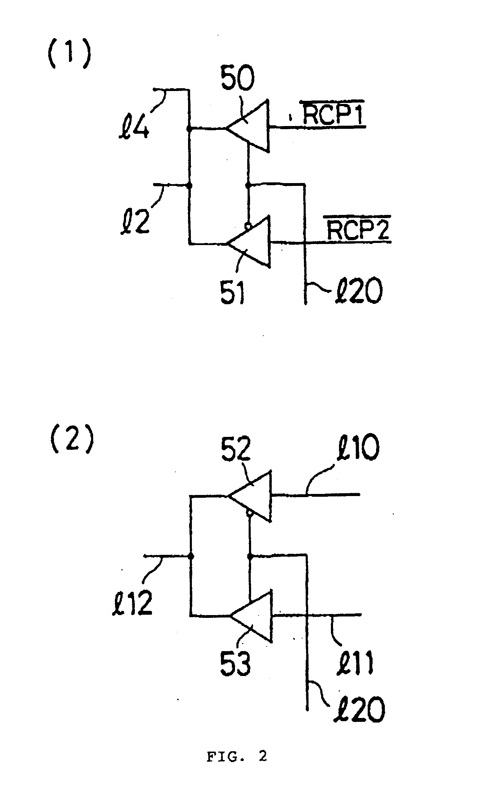

In above embodiment, setting of the JBA mode is explained. However, even in case the ABA mode is designated, similar operations are conducted. The common contact n1 of the switch circuit 18 is switched to the individual contact m2 side from the individual contact m1 and the common contact n2 of the switch circuit 22 is switched to the individual contact side m3 from the individual contact m4. As indicated in Fig. 2(1), the switch circuit 18 may be formed by a gate circuit utilizing a pair of tristate buffers 50, 51 and the switch circuit 22 may be formed, as indicated in Fig. 2(2), by a gate circuit utilizing the tristate buffers 52, 53.

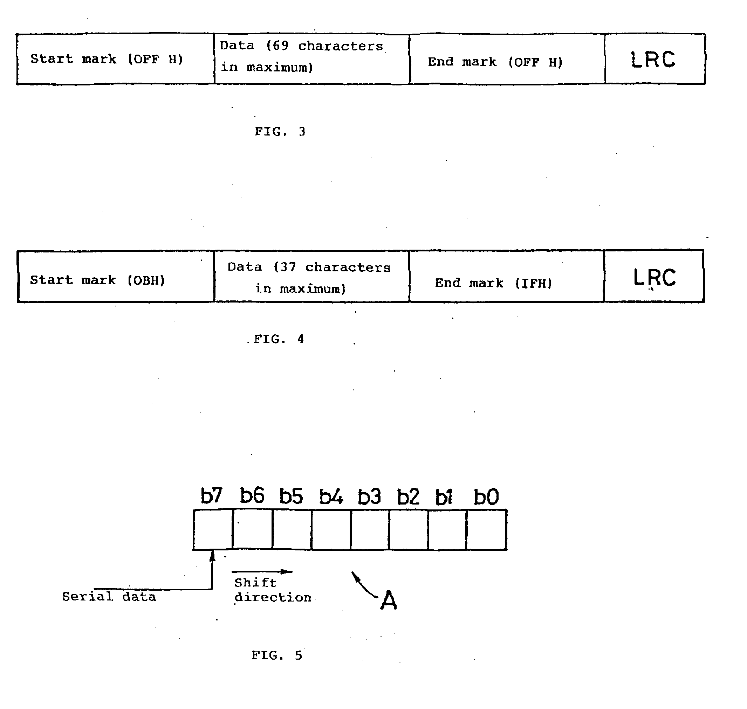

Fig. 3 indicates a format of data stored in the recording region of the JBA magnetic card C1. Fig. 4 indicates a format of data stored in the recording region of ABA magnetic card C2. As shown in Fig. 3 and Fig. 4, the format of data stored in both magnetic cards C1 and C2 is formed by start mark, data, end mark and character for horizontal even number parity check. In the case of the magnetic card C1, one character is formed by 6 bits, 7 bits indicates data and one bit is formed by the even number parity bit. In the case of the magnetic card C2, one character is formed by 5 bits, 4 bits indicates data and one bit is formed by the odd number parity bit.

In the case of international magnetic card C3, data is recorded in the format shown in Fig. 3 on the surface of the card and data is recorded in the format shown in Fig. 4 on the surface of rear surface 1b thereof.

Fig. 5 indicates a store region of a register A for start mark detection provided on the processing circuit 13. This register A is formed so that it can sequentially fetch the 8 bits data from the upper most digit bit b7 to the lower most digit b0 and the serial data applied to the control circuit 13 is sequentially stored from the upper most digit bit b7.

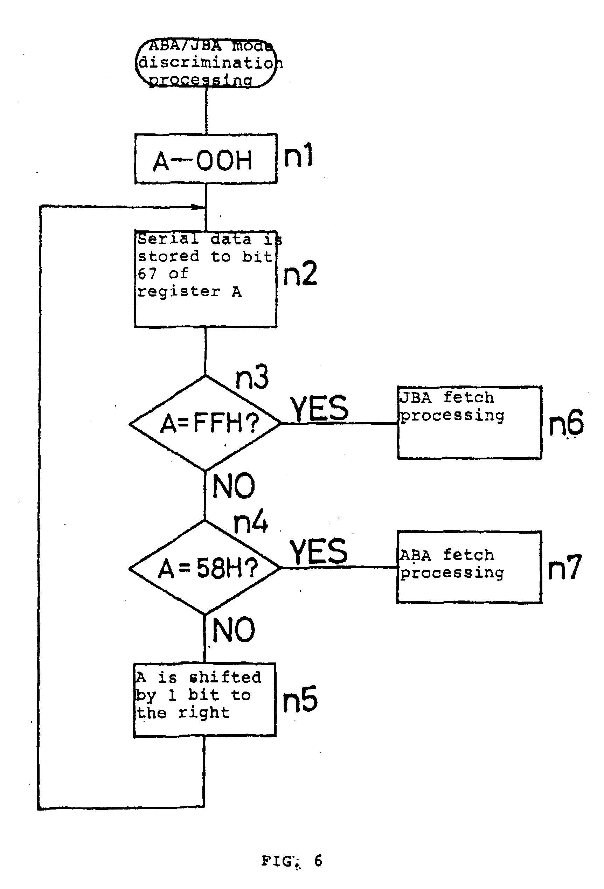

Fig. 6 is a flowchart indicating the ABA/JBA mode discrimination processing in the processing circuit 13. In the step n1, content of register A is set as OOH. Next, in the step n2, the first readout signal or the second readout signal are stored in the upper most bit b7 of the register A. In the step n3, it is decided that content of the register A is FFH or not. If not, the operation skips to the step n4 and then it is decided that content of the regiter A is 58H or not. In the step n4, if content of the register A is not 58H, content of the register A is shifted to the right by one bit in the step n5. Thereafter, processing returns again to the step n2. As explained above, the steps, n2, n3, n4, n5 are sequentially repeated and if content of the register A becomes FFH in the course of the operations, the operation shifts to the step n6 from the step n3 in order to realize the JBA fetch process. In this fetch process, fetching is carried out without error checks in every 8 bits. After the end mark of FFH is received, if the horizontal even number parity check characters LRC is received or the received data has exceeded 71 characters, data fetching operation completes and thereafter various error checks are started.

In case content of the register A becomes 56H in the course of steps n2, n3, n4, n5, the operation shifts to the step n7 from the step n4 in order to conduct the ABA fetching process. Although the start mark of ABA mode is 0BH (5 bits), it becomes 58H when the data is sequentially fetched from the upper most bit b7 of the register A. In the step n7, content is fetched without error checks in every 5 bits. When the horizontal even number parity check character LRC is received or the data has exceeded 39 characters after reception of end mark of 1FH, data fetching completes and thereafter various error checkes are started.

As explained previously, the processing speed can be improved remarkably owing to the structure that it is no longer necessary to previously set the fetch process in the control circuit 18 and any fetch processing mode can be executed depending on the readout signal input.

In above embodiment, the card reader is explained but the present invention can also be suitably applied to a card or the like reader which has employed optical recording system.

According to the present invention, any one of the first or second readout signal is designated preferentially with the priority designating means. Thereby, when a card or the like recording the first and second read signals to the front surface and the rear surface is read by the first and second headout heads, the switching mode is changed so that only the readout signal designating with priority the switching mode of the first and second siwtch means provided to the first and second signal lines is guided through the signal line.

Moreover, when the card or the like having the magnetic recording region only at the front surface is inserted, only the first read signal is read by the first readout head and the second read signal is not read out from the second readout head. In such a case, the first and the second switch means are changed so that the first switch means becomes conductive and the second switch means becomes nonconductive. Thereby, only the first readout signal is guided through the first signal line.

In addition, when a card or the like having the magnetic recording region only at the rear surface is inserted, the first read signal is not read by the first readout head and only the second read signal is read by the second readout head. In this case, the priority changeover circuit turns off the first switch means and turns on the second switch means. Aa a result, only the second readout signal is provided through the second signal line.

When previously designated readout signal is read as explained above, such a designated signal is guided with priority and when the designated signal is not readout, another readout signal is provided.

According to the present invention, as explained earlier, any one of the firt and second readout signals of the same contents may be provided with priority. In case one readout signal is not input, the other readout signal can be read and thereby any type of card or the like where only the first signal is recorded, only the second signal is recorded or first and second signals are recorded can be read. In addition, even if an operator sets errorneously the priority of readout signal, the readout signal in the other operation mode not yet preset may be read out. Accordingly, a card or the like can be read accurately only with a single card reader without providing various exclusive card readers.

While only certain embodiments of the present invention have been described, it will be apparent to those skilled in the art that various changes and modifications may be made therein without departing from the scope of the present invention as claimed.

## Claims

1. A card reading system (10) for reading the content of recording regions (2a, 2b) a card (C1, C2, C3), in which data is recorded to at least one of a front surface (1a) and a rear surface (1b) of the card (C1, C2, C3), comprising:
a first readout head (11) for reading a recording region (2a) provided on the front surface (1a);
a second readout head (12) for reading a recording region (2b) provided on the rear surface (1b), said first and second readout heads (11, 12) being capable of reading respective recording regions (2a, 2b) simultaneously;
a first signal line for providing a first readout signal (RDD1) from the first readout head (11);
a second signal line for providing a second readout signal (RDD2) from the second readout head (12);
a first switch means (16, 19) provided on said first signal line;
a second switch means (20, 21) provided on said second signal line;
a selection means (18, 22) for designating any of the first and second readout signals (RDD1, RDD2) with priority, and
a priority changeover circuit (FF1, FF2) for changing the switching mode of the first and second switch means (16, 19, 20, 21) so as to output the readout signal designated by said selection means (18, 22) when that designated readout signal contains data, and so as to output the non-designated readout signal when only that non-designated readout signal contains data.

2. The card reading system of claim 1, wherein said selection means comprises tristate buffer means.

## Patentansprüche

1. Kartenlesesystem (10) zum Lesen des Inhalts von Speicherbereichen (2a, 2b) einer Karte (C1, C2, C3), in denen Daten mindestens auf einer Vorderseite (1a) oder einer Rückseite (1b) der Karte (C1, C2, C3) gespeichert sind, bestehend aus:
- einem ersten Lesekopf (11) zum Lesen eines auf der Vorderseite (1a) vorhandenen Speicherbereichs (2a);
- einem zweiten Lesekopf (12) zum Lesen eines auf der Rückseite (1b) vorhandenen Speicherbereichs (2b), wobei der erste und der zweite Lesekopf (11, 12) in der Lage sind, gleichzeitig die jeweiligen Speicherbereiche (2a, 2b) zu lesen;
- eine erste Signalleitung zum Transport eines ersten Lesesignals (RDD1) vom ersten Lesekopf (11);
- eine zweite Signalleitung zum Transport eines zweiten Lesesignals (RDD2) vom zweiten Leskopf (12);
- ein erstes Schaltmittel (16, 19), das in der ersten Signalleitung angeordnet ist;
- ein zweites Schaltmittel (20,21), das in der zweiten Signalleitung angeordnet ist;
- ein Auswahlmittel (18, 22) zum Kennzeichnen des ersten oder des zweiten Lesesignals (RDD1, RDD2) mit einer Priorität, und
- ein Prioritäten-Wechsel-Schaltkreis (FF1, FF2) zum Wechseln der Schaltstellung der ersten und zweiten Schaltmittel (16, 19, 20, 21) in der Art, daß das von dem Auswahlmittel (18, 22) gekennzeichnete Lesesignal ausgegeben wird, wenn es Daten enthält, und das nicht-gekennzeichnete Lesesignal ausgegeben wird, wenn nur dieses Daten enthält.

2. Kartenlesesystem nach Anspruch 1, bei dem das Auswahlmittel wenigstens einen dreistufigen Puffer aufweist.

## Revendications

1. Système de lecture de carte (10) pour lire le contenu de régions d'enregistrement (2a, 2b) d'une carte (C1, C2, C3) sur laquelle des données sont enregistrées sur au moins l'une d'une face avant (1a) et d'une face arrière (1b) de la carte (C1, C2, C3), comprenant :
une première tête de lecture (11) pour lire une région d'enregistrement (2a) disposée sur la face avant (1a) ;
une seconde tête de lecture (12) pour lire une région d'enregistrement (2b) disposée sur la face arrière (1b), lesdites première et seconde têtes de lecture (11, 12) étant capables de lire simultanément les régions d'enregistrement (2a, 2b) respectives ;
une première ligne de signal pour délivrer un premier signal de lecture (RDD1) provenant de la première tête de lecture (11) ;
une seconde ligne de signal pour délivrer un second signal de lecture (RDD2) provenant de la seconde tête de lecture (12) ;
un premier moyen de commutation (16, 19) disposé sur ladite première ligne de signal ;
un second moyen de commutation (20, 21) disposé sur ladite seconde ligne de signal ;
un moyen de sélection (18, 22) pour désigner de façon prioritaire l'un ou l'autre des premier et second signaux de lecture (RDD1, RDD2) ; et,
un circuit de permutation de priorité (FF1, FF2) pour changer le mode de commutation des premier et second moyens de commutation (16, 19, 20, 21) de manière à fournir le signal de lecture désigné par ledit moyen de sélection (18, 22) lorsque ce signal de lecture désigné contient des données, et de manière à fournir le signal de lecture non désigné lorsque seul ce signal de lecture non désigné contient des données.

2. Système de lecture de carte selon la revendication 1, dans lequel ledit moyen de sélection comprend un organe tampon à trois états.
